# EUROPÄISCHE PATENTSCHRIFT

(11) **EP 0 336 176 B1**
(45) Veröffentlichungstag und Bekanntmachung des Hinweises auf die Patenterteilung: **30.06.1993**
(21) Anmeldenummer: 89104860.5
(22) Anmeldetag: 18.03.1989
(51) Int. Cl.: F16F 7/08

(54) **Reibungsdämpfer**
Friction damper
Amortisseur à friction

(30) Priorität: 08.04.1988 DE 3811742
(43) Veröffentlichungstag der Anmeldung: 11.10.1989
(73) Patentinhaber: SUSPA COMPART Aktiengesellschaft, D-90518 Altdorf (DE)
(72) Erfinder: Bauer, Hans Jürgen, D-8503 Altdorf (DE); Bauer, Hans-Peter, D-8503 Altdorf (DE); Stadelmann, Ludwig, D-8503 Altdorf (DE)
(74) Vertreter: Rau, Manfred, Dr. Dipl.-Ing.

(56) Entgegenhaltungen:
- EP-A- 292 881
- DE-A- 1 941 783
- DE-A- 2 238 595
- DE-A- 2 942 716
- US-A- 2 373 508
- US-A- 2 940 552
- US-A- 3 332 523
- US-A- 4 166 522

## Beschreibung

Die Erfindung betrifft einen Reibungsdämpfer nach dem Oberbegriff des Anspruches 1.

Aus der DE-B-29 42 716 ist ein Reibungsdämpfer bekannt, bei dem der Reibungsbelag aus geschäumtem, geschlossenzelligem Polyurethan-Kunststoff besteht und am Stößel angebracht ist. Er ist von seinem Außenumfang her vorgespannt und liegt unter Erzeugung von Reibungskräften an der Innenwand des rohrförmigen Gehäuses an. Mit dieser Ausgestaltung sind sehr gute gleichbleibende Reibungsverhältnisse erreicht. Die Einstellung unterschiedlicher Reibungskräfte bei ansonsten unveränderten Reibungsdämpfern ist nur mit verhältnismäßig großem Aufwand erreichbar.

Weiterhin ist ein Reibungsdämpfer der gattungsgemäßen Art bekannt, bei dem das rohrförmige Gehäuse im Bereich seines stößelaustrittsseitigen Endes einen erweiterten Aufnahmeabschnitt aufweist, der zum stößelseitigen Ende hin wiederum geschlossen ist. In diesen ringnutartigen Abschnitt wird ein Dämpfungsbelag in Form eines Streifens aus geschäumtem Kunststoff eingelegt. Der Stößel ist an der gesamten Innenwand des rohrförmigen Gehäuses geführt. Das rohrförmige Gehäuse und/oder der Stößel weist im Bereich des jeweiligen freien Endes eine Entlüftungsöffnung auf. Dieser Reibungsdämpfer ist sehr einfach in seinem Aufbau; durch die Art der Führung in Verbindung mit der Art der Anordnung des Dämpfungsbelages sind keine definierten Reibungsverhältnisse erreichbar. Darüber hinaus treten während des Betriebes Pfeifgeräusche auf. Außerdem besteht die Gefahr des Austritts von Schmierfett aus der Entlüftungsöffnung.

Aus der DE-A-22 38 595 ist ein Reibungsdämpfer bekannt, der aus einem Rohr sowie einer Stange mit einer Führungsscheibe besteht. Die Stoßdämpferstange ist in am Rohrende angebrachtem Reibungsmaterial geführt, das wiederum in einem in das Rohr eingeschraubten Gehäuse angeordnet ist.

Aus der US-A-33 32 523 ist ein Reibungsdämpfer bekannt, bei dem das Gehäuse an seinem kolbenstangenaustrittsseitigen Ende mit einer Erweiterung versehen ist, in die ein Gehäuse eingesetzt ist. In diesem Gehäuse ist eine Reibungshülse angeordnet, die gegen die Stange bzw. einen Zylinder anliegt. Zwischen der Hülse und dem Gehäuse sind Gummiringe u. dgl. angeordnet.

Aus der DE-A-22 38 595 ist ein Reibungsdämpfer mit den im Oberbegriff des Patentanspruches 1 angegebenen Merkmalen bekannt. Dabei ist der Dämpfungsbelag zusammen mit einem ringförmigen Teil aus elastisch kompressiblem Material in einem Dämpfungsgehäuse angeordnet, das von einem Gewindedeckel und einer Metallscheibe zur Abstützung des ringförmigen Teiles gebildet ist. Aufgrund der Konizität des Stößels dieses Reibungsdämpfers können die Einzelteile des Dämpfungsgehäuses sowie das ringförmige Teil und der Dämpfungsbelag nur getrennt voneinander auf den Stößel aufgeschoben werden Die vom Dämpfungsbelag aufgebrachte Reibungskraft ist durch ein unterschiedlich tiefes Einschrauben des Gewindedeckels in das Gehäuserohr des Reibungsdämpfers variabel einstellbar. Bei diesem Reibungsdämpfer sind das Dämfpungsgehäuse, das ringförmige Teil und, der Dämpfungsbelag nur einzeln montierbar. Auch sind durch die Einstellbarkeit der Reibungskraft Fehleinstellungen möglich.

Der Erfindung liegt die Aufgabe zugrunde, einen Reibungsdämpfer der gattungsgemäßen Art so weiterzubilden, daß mit geringem Aufwand die Einstellung und Beibehaltung konstanter, gegebenenfalls von Reibungsdämpfer zu Reibungsdämpfer unterschiedlicher Reibungsverhältnisse erreichbar ist

Diese Aufgabe wird erfindungsgemäß durch die Merkmale im Kennzeichnungsteil des Anspruches 1 gelöst. Durch die erfindungsgemäßen Maßnahmen wird der in ein gesondertes Dämpfungsgehäuse eingelegte bzw. in diesem gehaltene Dämpfungsbelag zu einer gesonderten Baugruppe gemacht, die jeweils zur Erzeugung unterschiedlicher Reibungsverhältnisse unterschiedlich ausgebildet sein kann, aber in einen ansonsten identischen Reibungsdämpfer einsetzbar ist. So kann in ein solches Dämpfungsgehäuse jeweils ein anderer Dämpfungsbelag eingelegt werden, der entweder aus unterschiedlichen Materialien mit unterschiedlichen Reibungsfaktoren gegenüber dem Material des Stößels besteht, oder der unterschiedliche radiale Erstreckung aufweist und somit eine unterschiedliche Vorspannung gegenüber dem Stößel aufweist. Alternativ oder kumulativ können auch die Abmaße des Dämpfungsgehäuses geändert werden, so daß von dort her der Dämpfungsbelag unterschiedlich stark radial gegen den Stößel vorgespannt wird. Die Dämpfungsgehäuse können farbig unterschiedlich ausgebildet sein, um auf diese Weise die Lagerhaltung zu vereinfachen. Die erfindungsgemäßen Maßnahmen ermöglichen es zum einen dem Hersteller des Reibungsdämpfers die Fertigung zu vereinfachen. Darüber hinaus ist es aber auch möglich, daß der Anwender, beispielsweise ein Waschmaschinenhersteller, sich die jeweiligen Reibungsdämpfer durch Auswahl des entsprechenden Dämpfungsgehäuses mit Dämpfungsbelag für den konkreten Anwendungsfall zusammenstellt.

Die Ansprüche 2 bis 5 geben besonders vorteilhafte Ausgestaltungen des Dämpfungsgehäuses selber wieder. Aus den Ansprüchen 6 bis 8 ergeben sich besonders bevorzugte Arten der Befestigung des Dämpfungsgehäuses im rohrförmigen Gehäuse.

Im Zusammenhang mit den erfindungsgemäßen Maßnahmen ist die Weiterbildung nach Anspruch 9 von besonderem Vorteil, da durch die Führungsstege für den Stößel genau definierte, d.h. von Reibungsdämpfer zu Reibungsdämpfer gleichbleibende Reibungsverhältnisse zwischen Stößel und Gehäuse, d.h. zwischen dem Stößel und den Führungseinrichtungen für ihn im Gehäuse erreicht werden. Weiterhin ist in diesem Zusammenhang von besonderem Vorteil, wenn Lüftungsschlitze nach Anspruch 10 vorgesehen sind, und zwar insbesondere wenn sie nach Anspruch 11 angeordnet sind. Durch die Anordnung der Lüftungsschlitze unmittelbar benachbart zum Dämpfungsgehäuse wird erreicht, daß bei jedem Hub des Stößels dessen Außenwand von der durch die Lüftungsschlitze abströmenden bzw. einströmenden Luft umströmt und damit gekühlt wird. Auch dies führt zu einer präziseren Konstanthaltung der Reibungsverhältnisse über einen Arbeitszyklus, währenddessen erhebliche Erwärmungen durch Reibungsarbeit auftreten können. Durch die Größe der Lüftungsschlitze wird sichergestellt, daß Pfeifgeräusche nicht auftreten können. Der Dämpfungsbelag ist bevorzugt nach Anspruch 12, insoweit also in bekannter Weise ausgestaltet, d.h. er besteht in der Regel aus geschlossenzelligem geschäumtem Polyurethan-Kunststoff und ist in seiner Oberfläche mit einem Schmiermittel imprägniert.

Bei einer anderen Grund-Ausgestaltung des Reibungsdämpfers dient das Dämpfungsgehäuse nach Anspruch 13 selber auch als Führungsgehäuse für den Stößel. Insbesondere in diesem Fall ist eine Weiterbildung nach Anspruch 14 von Vorteil, da diese Anpassungen an unterschiedliche Gehäusedurchmesser ermöglicht.

Weitere Einzelheiten der Erfindung ergeben sich aus der nachfolgenden Beschreibung von Ausführungsbeispielen anhand der Zeichnung. Es zeigt
- Fig. 1: einen Längsschnitt durch einen Reibungsdämpfer mit Dämpfungsgehäuse gemäß der Schnittlinie I-I in Fig. 3,
- Fig. 2: einen in seinem Grundaufbau mit dem Reibungsdämpfer nach Fig. 1 identischen Reibungsdämpfer mit einem abgewandelten Dämpfungsgehäuse entsprechend der Schnittlinie II-II in Fig. 3,
- Fig. 3: einen Schnitt durch die Reibungsdämpfer nach den Fig. 1 und 2 entsprechend den Schnittlinien III-III in Fig. 1 und Fig. 2,
- Fig. 4: eine abgewandelte Ausführung eines Reibungsdämpfers mit einem abgewandelten Reibungsgehäuse im Teil-Längsschnitt,
- Fig. 5: eine weitere abgewandelte Ausführungsform eines Reibungsdämpfers mit einem geänderten Dämpfungsgehäuse im Teil-Längsschnitt,
- Fig. 6: einen Querschnitt durch den Reibungsdämpfer nach Fig. 5 entsprechend der Schnittlinie VI-VI in Fig. 5 und
- Fig. 7: einen als Federbein ausgebildeten Reibungsdämpfer mit einem als Führungsgehäuse ausgebildeten Dämpfungsgehäuse im Längsschnitt.

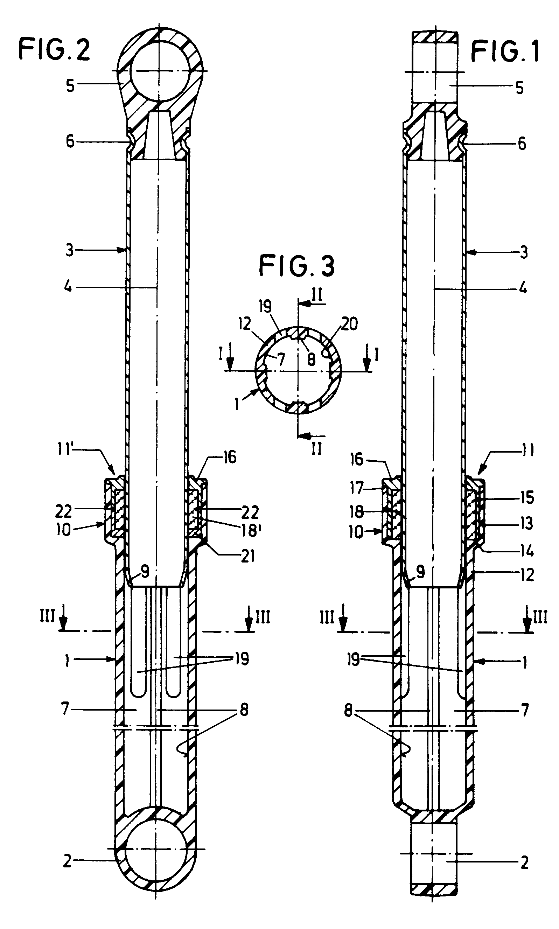

Der Reibungsdämpfer für die Ausführungsformen nach den Fig. 1 bis 6 weist ein rohrförmiges Gehäuse 1 auf, das einstückig aus Kunststoff gespritzt ist. An seinem freien Ende ist es mit einem Anschlußelement 2 in Form eines sogenannten Auges versehen. In dem Gehäuse 1 ist ein Stößel 3 in Richtung der gemeinsamen Längsachse 4 von Gehäuse 1 und Stößel 3 verschiebbar angeordnet. Dieser Stößel 3 besteht bei dem Ausführungsbeispiel nach den Fig. 1 bis 6 im wesentlichen aus einem relativ dünnwandigen Metallrohr. Am äußeren freien Ende ist der Stößel 3 ebenfalls mit einem Anschlußelement in Form eines sogenannten Auges versehen, wobei die Verbindung beispielsweise durch eine Sicke 6 hergestellt ist. Der Reibungsdämpfer kann mittels seiner Anschlußelemente 2 und 5 an zwei Teilen angelenkt werden, deren Bewegungen relativ zueinander gedämpft werden. Ein wichtiges und wirtschaftlich sehr bedeutendes Anwendungsgebiet sind Waschmaschinen, wobei ein Anschlußelement 2 am Waschaggregat und ein Anschlußelement 5 an der Bodenplatte der Waschmaschine angelenkt werden. Stößel 3 und Gehäuse 1 sind relativ zueinander um ihre Längsachse 4 drehbar.

Das Gehäuse 1 weist an seiner Innenwand 7 radial nach innen vorspringende und parallel zu letzterer verlaufende Führungsstege 8 auf, die sich im wesentlichen über die Längserstreckung der Innenwand 7 erstrecken. Diese Führungsstege 8 sind in gleichen Winkelabständen zueinander angeordnet. Es handelt sich mindestens um drei Führungsstege; im Ausführungsbeispiel sind vier im Abstand von 90° zueinander angeordnete Führungsstege 8 vorgesehen. Um das Einführen des Stößels 3 in das Gehäuse 1 zu erleichtern, ist der Stößel 3 an seinem seinem Anschlußelement 5 entgegengesetzten Ende mit einer radialen Einschnürung 9 angebracht.

An dem dem Anschlußelement 2 entgegengesetzten stößelaustrittsseitigen Ende 10 ist im Gehäuse 1 ein Aufnahmeabschnitt 10 für ein Dämpfungsgehäuse 11 ausgebildet. Dieser Aufnahmeabschnitt 10 ist im wesentlichen ringzylindrisch ausgebildet und weist einen größeren Innendurchmesser auf als dem Außendurchmesser des Stößels 3 entspricht. Im Übergangsbereich zwischen der Wand 12 des Gehäuses 1 und der Wand 13 des Dämpfungsgehäuses 11 ist ein als Anschlagbund 14 dienender Übergangsbereich vorgesehen.

Das in Fig. 1 dargestellte Dämpfungsgehäuse 11 weist eine ringzylindrische Außenwand 15 auf, die an einem Ende mit einem Anschlagflansch 16 versehen ist, der radial etwa bis zum Stößel 3 nach innen vorragt, und an diesem weitgehend spielfrei aber reibungsfrei anliegt. Radial nach außen steht der Anschlagflansch 16 so weit vor, daß er beim Einschieben des Dämpfungsgehäuses 11 in den Aufnahmeabschnitt 10 gegen dessen stirnseitigen Rand 17 zur Anlage kommt. Die Außenwand 15 kommt hierbei am Anschlagbund 14 zur Anlage.

Im Dämpfungsgehäuse 11 ist ein Dämpfungsbelag 18 angeordnet, der durch einen sich über den gesamten Innenumfang des Dämpfungsgehäuses 11 erstreckenden, also etwa quaderförmigen Streifen aus geschäumtem Kunststoff oder Filz od. dgl. besteht. Bevorzugt wird geschlossenzelliger geschäumter Polyurethan-Schaumstoff verwendet. Die Dimensionierung des Dämpfungsbelages 18 kann so sein, daß er vor dem Einführen des Stößels 3 in das Gehäuse 1 durch das Dämpfungsgehäuse 11 hindurch radial weiter nach innen vorsteht, als dem Aussendurchmesser des Stößels 3 entspricht, so daß er beim Einführen des Stößels 3 zusammengepreßt wird, wodurch je nach Umfang der Zusammenpressung unterschiedlich starke Anpreßkräfte und damit Reibungskräfte hervorgerufen werden. Andererseits kann die Außenwand 15 des Dämpfungsgehäuses 11 unterschiedliche Innendurchmesser aufweisen, so daß von dort her bei ansonsten gleichen Dämpfungsbelägen 18 unterschiedliche radiale Vorspannungen der Dämpfungsbeläge und damit unterschiedliche Reibungskräfte beim Einführen des Stößels 3 erreicht werden. Die Dämpfungsgehäuse 11 mit Dämpfungsbelag 18 können in der angedeuteten unterschiedlichen Ausgestaltung zur Erzeugung unterschiedlicher Reibungskräfte in entsprechend markierter Form, beispielsweise in unterschiedlichen Farben vorgefertigt auf Lager gehalten und dann bei Bedarf in den Aufnahmeabschnitt 10 des Gehäuses 1 eingesetzt werden. Sie können dort durch Kleben, Ultraschallschweißung, Drehschweißung oder auch durch einfachen Preßsitz axial fest gegen ein Herausrutschen bzw. Herausziehen zusammen mit dem Stößel 3 gesichert werden.

Unmittelbar benachbart zum Aufnahmeabschnitt 10 für das Dämpfungsgehäuse 11 sind in der Wand 12 des Gehäuses 1 zwischen den Führungsstegen 8 Lüftungsschlitze 19 ausgebildet, die sich etwa über ein Fünftel bis ein Drittel der Länge des Gehäuses 1 erstrekken. Wenn der Stößel 3 in das Gehäuse 1 eingeschoben wird, dann verdrängt er die im Gehäuse 1 befindliche Luft, wobei diese dann, wenn der Stößel 3 die Lüftungsschlitze 19 überdeckt, durch schmale Kanäle 20 zwischen dem Stößel 3 und der Innenwand 7 des Gehäuses 1 herausgedrückt wird, die jeweils noch durch die Führungsstege 8 begrenzt werden. Hierdurch erfolgt eine intensive Kühlung der Außenseite des Stößels 3.

Das Ausführungsbeispiel nach Fig. 2 hat ein mit der Ausführungsform nach Fig. 1 identisches Gehäuses 1 und einen identischen Stößel 3. Lediglich das Dämpfungsgehäuse 11′ weist an seinem dem als Anschlagbund 14 dienenden Übergangsbereich zugewandten Ende einen radial nach innen vorstehenden ringartigen Anschlagbund 21 auf, so daß der Dämpfungsbelag 18′ im Dämpfungsgehäuse 11′ selber in beiden Richtungen der Längsachse 4 festgelegt ist. Aus fertigungstechnischen Gründen ist das Dämpfungsgehäuse 11′ nicht wie das Dämpfungsgehäuse 11 einteilig, sondern zweiteilig ausgebildet; es ist quer zur Längsachse 4 geteilt, wobei die Teilungsebene 22 durch die Außenwand 15′ gelegt ist.

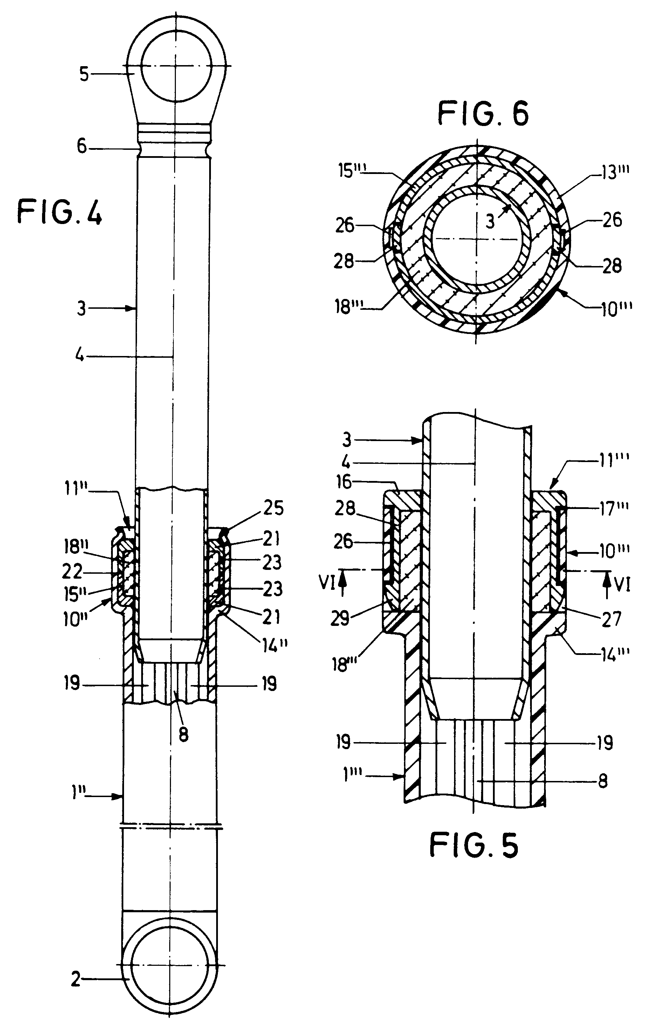

Bei der Ausgestaltung nach Fig. 4 ist das Gehäuse 1˝ durch ein Metallrohr gebildet, das mit einem Aufnahmeabschnitt 10˝ an seinem Ende versehen ist. Das Dämpfungsgehäuse 11˝ besteht aus zwei identischen Teil-Gehäusen 23, die in einer Teilungsebene 24 spiegelsymmetrisch gegeneinandergesetzt sind. Ihre ringförmigen Anschlagbunde 21 dienen hierbei einmal als Anschlagbund und zum anderen als Anschlagflansch, legen also den Dämpfungsbelag 18˝ in beiden Richtungen der Längsachse 4 fest. Die axiale Festlegung des Dämpfungsgehäuses 11˝ mit Dämpfungsbelag 18˝ im Aufnahmeabschnitt 10˝ erfolgt dadurch, daß dessen freies Ende mit einer radial nach innen gerichteten Umbördelung 25 versehen wird, wodurch das Dämpfungsgehäuse 11˝ gleichzeitig gegen den Anschlagbund 14˝ des Aufnahmeabschnitts 10˝ gedrückt wird. Auch hier gelten die obigen Ausführungen zu den Variationsmöglichkeiten hinsichtlich der Dicke der Außenwand 15˝ und des Dämpfungsbelages 18˝, wie es vorstehend bereits detailliert erläutert wurde.

Die Ausgestaltung nach den Fig. 5 und 6 entspricht wieder weitgehend der nach Fig. 1. Es sind lediglich andere Maßnahmen zur Festlegung des Dämpfungsgehäuses 11‴ im Aufnahmeabschnitt 10‴ vorgesehen. Die Wand 13‴ des Aufnahmeabschnitts 10‴ weist eine sich von ihrem Rand 17‴ bis in die Nähe des Anschlagbundes 14‴ erstreckende innere Nut 26 auf, die an ihrem dem Anschlagbund 14‴ benachbarten Ende eine nach außen gerichtete Öffnung 27 aufweist. Ein Teil der Außenwand 15‴ des Dämpfungsgehäuses 11‴ ist als federnde Zunge 28 mit einer Rastnase 29 ausgebildet. Beim Einschieben des Dämpfungsgehäuses 11‴ in den Aufnahmeabschnitt 10‴ wird die Rastnase 29 durch die Nut 26 geschoben, wodurch sich diese zusammen mit der Zunge 28 unter entsprechender Verformung des Dämpfungsbelages 18‴ nach innen drückt. Bei Erreichen der Öffnung 27 rastet die Rastnase 29 in diese ein, wodurch das Dämpfungsgehäuse 11‴ gegen ein Herausziehen aus dem Aufnahmeabschnitt 10‴ gesichert ist. Wenn die Rastnase 29 durch die Öffnung 27 von außen nach innen gedrückt wird, ist ein Entrasten und damit ein Herausziehen des Dämpfungsgehäuses 11‴ mit Dämpfungsbelag 18‴ möglich.

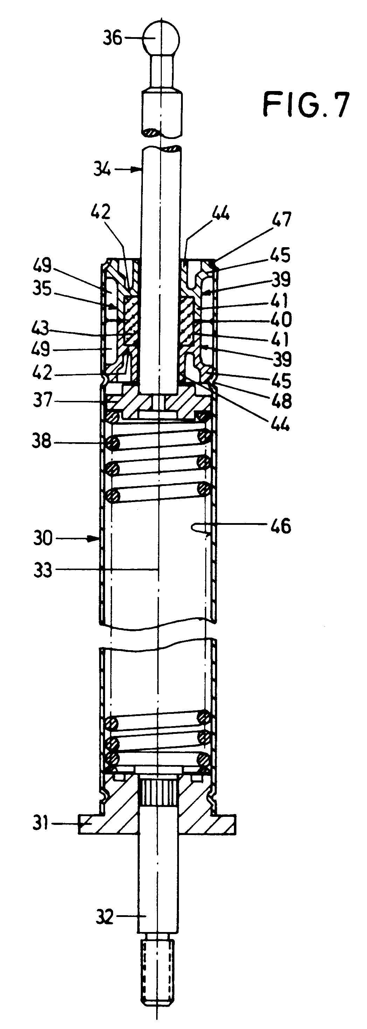

In Fig. 7 ist ein in seinem Grundaufbau bekannter als Federbein ausgebildeter Reibungsdämpfer dargestellt. Er weist ein rohrförmiges Gehäuse 30 auf, das an einem Ende mit einer Abschlußplatte 31 versehen ist, an der wiederum ein als Anschlußelement 32 dienender Befestigungsbolzen angebracht ist, mittels dessen der Reibungsdämpfer beispielsweise an der Grundplatte einer Waschmaschine befestigt werden kann. Auf den Befestigungsbolzen werden hierbei zwei Gummironden aufgeschoben, die zwischen sich den entsprechenden Abschnitt der Grundplatte der Waschmaschine aufnehmen. Sie werden mittels einer Mutter gehalten und vorgespannt. Dies ist allgemeiner Stand der Technik auf diesem Gebiet.

Im Gehäuse 30 ist fluchtend mit der gemeinsamen Längsachse 33 ein als massive Stange ausgebildeter Stößel 34 verschiebbar angeordnet, der in einem auch als Führungsgehäuse dienenden Dämpfungsgehäuse 35 dämpfend geführt ist. Der Stößel 34 weist an seinem freien Ende eine Kugel als Anschlußelement 36 auf. Am inneren Ende des Stößels 34 ist eine Widerlagerplatte 37 befestigt, zwischen der und der Abschlußplatte 31 eine Schrauben-Druckfeder 38 angeordnet ist, so daß der Reibungsdämpfer gleichzeitig als Federbein, insbesondere zur Waschmaschinenabstützung, dient.

Das Dämpfungsgehäuse 35 besteht aus zwei identisch aufgebauten Teil-Gehäusen 39, die spiegelsymmetrisch zueinander in einer gemeinsamen quer zur Längsachse 33 verlaufenden Teilungsebene 40 mit ihren Außenwänden 41 aneinander anliegen. Von der Außenwand 41 ragen Anschlagbunde 42 radial nach innen. In dem Bereich zwischen den beiden Anschlagbunden 42 und der Außenwand 41 ist ein Dämpfungsbelag 43 angeordnet, der identisch mit den oben beschriebenen Dämpfungsbelägen ausgebildet sein kann. An die Anschlagbunde 42 schließen sich in Richtung der Längsachse 33 ringzylindrische Führungsflächen 44 für den Stößel 34 an, die dadurch, daß der Dämpfungsbelag 43 zwischen ihnen angeordnet ist, eine relativ große Führungslänge für den Stößel 34 erzeugen. Von den Anschlagbunden 42 erstrecken sich im Bereich der Außenwand 41 jeweils angenähert parallel zu den Führungsflächen 44 Stütz- und Zentrierstege 45 in axialer Richtung und radial nach außen, die sich gegen die Innenwand 46 des Gehäuses 30 abstützen und das Dämpfungsgehäuse 35 hier radial festlegen. Nach außen ist das Dämpfungsgehäuse 35 durch eine Umbördelung 47 des Gehäuses 30 gesichert. Gegen ein Verrutschen in das Gehäuse 30 hinein oder aus diesem hinaus ist es durch eine Sicke 48 gesichert, die gleichzeitig als Anschlag für die Widerlagerplatte 37 dient, so daß letztere nicht unter der Kraft der Druckfeder 38 gegen das Dämpfungsgehäuse 35 drückt. Auch hier gilt, daß durch entsprechende Dimensionierung des Dämpfungsgehäuses 35, und zwar insbesondere seiner Außenwand 41 und/oder durch Dimensionierung des Dämpfungsbelages 43 oder durch entsprechende Werkstoffwahl für den Dämpfungsbelag 43 bei ansonsten unverändertem Aufbau des als Federbein dienenden Reibungsdämpfers die Reibungsverhältnisse verändert werden können.

Die Teilgehäuse 39 weisen jeweils an ihrer Außenwand 41 parallel zur Längsachse 33 verlaufende Rippen 49 auf, die sich gegen die Innenwand 41 abstützen, so daß eine einwandfreie radiale Abstützung der Teil-Gehäuse 39 gegenüber dem Gehäuse 30 erfolgt.

## Patentansprüche

1. Reibungsdämpfer mit einem rohrförmigen Gehäuse (1,1'',30) und einem in diesem m Richtung seiner Längsachse (4,33) verschiebbar geführten und aus einem Ende desselben herausragenden Stößel (3,34), wobei das Gehäuse (1,1'',30) und der Stößel (3,34) jeweils an ihrem freien Ende mit einem Anschlußelement (2,5,32,36) versehen sind und wobei das Gehäuse (1,1'',30) im Bereich seines stößelaustrittsseitigen Endes einen an dem Stößel (3,34) anliegenden Dämpfungsbelag (18,18',18'',18''',43) aufweist, der in einem Dämpfungsgehäuse (11,11',11'',11''',35) angeordnet ist, dadurch gekennzeichnet, daß das Dämpfungsgehäuse (11,11',11'',11''',35) mit dem Dämpfungsbelag (18,18',18'',18''',43) als gesonderte Baugruppe von dem stößelaustrittsseitigen Ende her in das rohrförmige Gehäuse (1,1'',30) eingeschoben, dort axial in Richtung seiner Längsachse (4,33) festgelegt und als Führungsgehäuse ausgebildet ist, das mindestens eine dem Dämpfungsbelag (43) benachbarte Führungsfläche (44) für den Stößel aufweist.

2. Reibungsdämpfer nach Anspruch 1, dadurch gekennzeichnet, daß das Dämpfungsgehäuse (11,11′,11‴) einen das stößelaustrittsseitige Ende des rohrförmigen Gehäuses (1,30) abschließenden Anschlagflansch (16) aufweist.

3. Reibungsdämpfer nach Anspruch 1 oder 2, dadurch gekennzeichnet, daß das rohrförmige Gehäuse (1,1˝,30) einen Anschlagbund (14,14˝,14‴, Sicke 48) für das Dämpfungsgehäuse (11,11′,11˝,11‴,35) und/oder den Dämpfungsbelag (18,18‴) aufweist.

4. Reibungsdämpfer nach einem der Ansprüche 1 bis 3, dadurch gekennzeichnet, daß das rohrförmige Gehäuse (1,1˝) einen erweiterten Aufnahmeabschnitt (10,10˝, 10‴) für das Dämpfungsgehäuse (11,11′,11˝,11‴) aufweist.

5. Reibungsdämpfer nach einem der Ansprüche 1 bis 4, dadurch gekennzeichnet, daß das Dämpfungsgehäuse (11′,35) quer zur Längsachse (4,33) geteilt ist und den Dämpfungsbelag (18′,43) in Richtung der Längsachse (4,33) beidseitig mittels Anschlagbunden (21,42) festlegt.

6. Reibungsdämpfer nach einem der Ansprüche 1 bis 4, dadurch gekennzeichnet, daß das Dämpfungsgehäuse (11‴) in dem rohrförmigen Gehäuse (1) mittels einer gegebenenfalls lösbaren Rastverbindung in Richtung der Längsachse (4) festgelegt ist.

7. Reibungsdämpfer nach einem der Ansprüche 1 bis 5, dadurch gekennzeichnet, daß das Dämpfungsgehäuse (11,11′) in dem rohrförmigen Gehäuse (1) mittels Kleben, Schweißen, Preßsitz od. dgl. festgelegt ist.

8. Reibungsdämpfer nach einem der Ansprüche 1 bis 5, dadurch gekennzeichnet, daß das Dämpfungsgehäuse (11˝,35) in dem rohrförmigen Gehäuse (1˝,30) durch mindestens einen radial nach innen verformten Bereich (Umbördelung 25,47, Sicke 48) des rohrförmigen Gehäuses (1˝,30) gehalten ist.

9. Reibungsdämpfer nach einem der Ansprüche 1 bis 8, dadurch gekennzeichnet, daß an der Innenwand (7) des rohrförmigen Gehäuses (1) mindestens drei sich parallel zur Längsachse (4) erstreckende und von der Innenwand (7) radial nach innen vorspringende Führungsstege (8) für den Stößel (3) ausgebildet sind.

10. Reibungsdämpfer nach einem der Ansprüche 1 bis 9, dadurch gekennzeichnet, daß in der Wand (12) des rohrförmigen Gehäuses (1) benachbart zum Dämpfungsgehäuse (11) parallel zur Längsachse (4) verlaufende Lüftungsschlitze (19) ausgebildet sind.

11. Reibungsdämpfer nach den Ansprüchen 9 und 10, dadurch gekennzeichnet, daß die Lüftungsschlitze (19) zwischen den Führungsstegen (8) angeordnet sind.

12. Reibungsdämpfer nach einem der Ansprüche 1 bis 11, dadurch gekennzeichnet, daß der Dämpfungsbelag (18,18′,18˝,18‴,43) aus geschäumtem Kunststoff besteht.

13. Reibungsdämpfer nach einem der Ansprüche 1 bis 11, insbesondere nach Anspruch 5, dadurch gekennzeichnet, daß das Dämpfungsgehäuse (35) beiderseits des Dämpfungsbelages (43) Führungsflächen (44) für den Stößel (34) aufweist.

14. Reibungsdämpfer nach einem der Ansprüche 1 bis 9 oder 12 bis 13, insbesondere nach Anspruch 13, dadurch gekennzeichnet, daß das Dämpfungsgehäuse (35) über Stütz- und Zentrierstege (45) in dem rohrartigen Gehäuse (30) radial abgestützt ist.

15. Reibungsdämpfer nach einem der Ansprüche 1 bis 14, dadurch gekennzeichnet, daß das Dämpfungsgehäuse (11, 11', 11'', 11''', 35) als Führungsgehäuse ausgebildet ist.

## Claims

1. Frictional damper comprising a tubular housing (1, 1'', 30) and a slide (3, 34) which is slidably guided in this housing in the direction of its longitudinal axis (4, 33) and projects out of an end thereof, the housing (1, 1'', 30) and the slide (3, 34) each being provided with a connecting element (2, 5, 32, 36) at each of their free ends and the housing (1, 1'', 30) having a damping lining (18, 18', 18'', 18''', 43) bearing against the slide (3, 34) in the area of its end on the slide exit side, characterized in that the damping housing (11, 11', 11'', 11''', 35) with the damping lining (18, 18', 18'', 18''', 43) as a separate component is inserted into the tubular housing (1, 1'', 30) from the end on the slide exit side, where it is fixed axially in the direction of its longitudinal axis (4, 33), and is in the form of a guide housing, which has at least one guiding face (44) for the slide adjacent to the damping lining (43).

2. Frictional damper according to Claim 1, characterised in that the damping housing (11, 11', 11''') has a stop flange (16) which seals off that end of the tubular housing (1, 30) which is on the slide exit side.

3. Frictional damper according to Claim 1 or 2, characterised in that the tubular housing (1, 1'', 30) has a stop shoulder (14, 14'', 14''', bead 48) for the damping housing (11, 11', 11'', 11''', 35) and/or the the damping lining (18, 18''').

4. Frictional damper according to any one of Claims 1 to 3, characterised in that the tubular housing (1, 1'') has an enlarged section (10, 10'', 10''') for receiving the damping housing (11, 11', 11'', 11''').

5. Frictional damper according to any one of Claims 1 to 4, characterised in that the damping housing (11', 35) is divided at right angles to the longitudinal axis (4,33) and fixes the damping lining (18', 43) in the direction of the longitudinal axis (4, 33) on both sides by means of stop shoulders (21, 42).

6. Frictional damper according to any one of Claims 1 to 4, characterised in that the damping housing (11''') is fixed in the direction of the longitudinal axis (4) in in the tubular housing (1) by means of an, if necessary, detachable locking connection.

7. Frictional damper according to any one of Claims 1 to 5, characterised in that the damping housing (11, 11') is fixed in the tubular housing (1) by means of bonding, welding, press fit or the like.

8. Frictional damper according to any one of Claims 1 to 5, characterised in that the damping housing (11'', 35) is retained in the tubular housing (1'', 30) by at least one radially inwardly deformed section (flange 25,47, bead 48) of the tubular housing (1'', 30).

9. Frictional damper according to any one of Claims 1 to 8, characterised in that at least three guide webs (8) for the slide (3), which extend parallel to the longitudinal axis (4) and project radially inwards from the inner wall (7), are formed on this inner wall (7) of the tubular housing (1).

10. Frictional damper according to any one of Claims 1 to 9, characterised in that ventilation slots (19) running parallel to the longitudinal axis (4) are formed in the wall (12) of the tubular housing (1) adjacent to the damping housing (11).

11. Frictional damper according to Claims 9 and 10, characterised in that the ventilation slots (19) are arranged between the guide webs (8).

12. Frictional damper according to any one of Claims 1 to 11, characterised in that the damping lining (18, 18', 18'', 18''', 43) is made of foamed plastic material.

13. Frictional damper according to any one of Claims 1 to 11, particularly according to Claim 5, characterised in that the damping housing (35) has guide faces (44) for the slide (34) on both sides of the damping lining (43).

14. Frictional damper according to any one of Claims 1 to 9 or 12 to 13, particularly according to Claim 13, characterised in that the damping housing (35) is supported radially in the tubular housing (30) by way of supporting and centering webs (45).

15. Frictional damper according to any one of Claims 1 to 14, characterised in that the damping housing (11, 11', 11'', 11''', 35) is in the form of a guide housing.

## Revendications

1. Amortisseur à friction comprenant un carter tubulaire (1, 1'', 30) et un coulisseau (3, 34) qui est guidé dans ledit carter (1, 1'', 30) de manière coulissante dans le sens de son axe longitudinal et qui dépasse de l'une des extrémités dudit carter (1, 1'', 30), le carter (1, 1'', 30) et le coulisseau (3, 34) comportant chacun, à leur extrémité libre, un élément de liaison (2, 5, 32, 36), et le carter (1, 1'', 30) comportant, dans la zone de son extrémité située côté sortie du coulisseau, une garniture d'amortissement (18, 18', 18'', 18''', 43) qui est appliquée contre le coulisseau (3, 34) et disposée dans un carter d'amortissement (11, 11', 11'', 11''', 35), caractérisé en ce que le carter d'amortissement (11, 11', 11'', 11''', 35) associé à la garniture d'amortissement (18, 18', 18'', 18''', 43) est emmanché dans le carter tubulaire (1, 1'', 30), sous la forme d'un ensemble séparé, par l'extrémité située côté sortie du coulisseau, y est immobilisé axialement dans le sens de son axe longitudinal (4, 33) et est conçu sous la forme d'un carter de guidage qui comporte au moins une surface de guidage (44) voisine de la garniture d'amortissement (43) et destinée au coulisseau.

2. Amortisseur à friction selon la revendication 1, caractérisé en ce que le carter d'amortissement (11, 11', 11'', 11''') comporte une collerette de butée (16) qui ferme l'extrémité, située côté sortie du coulisseau, du carter tubulaire (1, 30).

3. Amortisseur à friction selon la revendication 1 ou 2, caractérisé en ce que le carter tubulaire (1, 1'', 30) comporte un collet de butée (14, 14', 14'', 14''', moulure 48) destiné au carter d'amortissement (11, 11', 11'', 11''', 35) et/ou à la garniture d'amortissement (18, 18''').

4. Amortisseur à friction selon l'une des revendications 1 à 3, caractérisé en ce que le carter tubulaire (1, 1'') comporte une partie de réception élargie (10, 10'', 10''') destinée au carter d'amortissement (11, 11', 11'', 11''').

5. Amortisseur à friction selon l'une des revendications 1 à 4, caractérisé en ce que le carter d'amortissement (11', 35) est divisé transversalement à l'axe longitudinal (4, 33) et immobilise la garniture d'amortissement (18', 43) dans le sens de l'axe longitudinal (4, 33) des deux côtés au moyen de collets de butée (21, 42).

6. Amortisseur à friction selon l'une des revendications 1 à 4, caractérisé en ce que le carter d'amortissement (11''') est immobilisé dans le carter tubulaire (1) au moyen d'une liaison crantée, le cas échéant détachable, dans le sens de l'axe longitudinal (4).

7. Amortisseur à friction selon l'une des revendications 1 à 5, caractérisé en ce que le carter d'amortissement (11, 11') est immobilisé dans le carter tubulaire (1) par collage, soudage, emmanchement à force ou analogue.

8. Amortisseur à friction selon l'une des revendications 1 à 5, caractérisé en ce que le carter d'amortissement (11'', 35) est maintenu dans le carter tubulaire (1'', 30) par au moins une zone (rebord 25, 47, moulure 48) du carter tubulaire (1'', 30), ladite zone étant déformée radialement vers l'intérieur.

9. Amortisseur à friction selon l'une des revendications 1 à 8, caractérisé en ce que, sur la paroi intérieure (7) du carter tubulaire (1), sont prévues, pour le coulisseau (3), au moins trois nervures de guidage (8) qui s'étendent parallèlement à l'axe longitudinal (4) et font saillie radialement vers l'intérieur sur la paroi intérieure (7).

10. Amortisseur à friction selon l'une des revendications 1 à 9, caractérisé en ce que des fentes de ventilation (19) qui s'étendent parallèlement à l'axe longitudinal (4) sont pratiquées dans la paroi (12) du carter tubulaire (1) au voisinage du carter d'amortissement (11).

11. Amortisseur à friction selon les revendications 9 et 10, caractérisé en ce que les fentes de ventilation (19) sont pratiquées entre les nervures de guidage (8).

12. Amortisseur à friction selon l'une des revendications 1 à 11, caractérisé en ce que la garniture d'amortissement ((18, 18', 18'', 18''', 43) est en matière plastique moussée.

13. Amortisseur à friction selon l'une des revendications 1 à 11, en particulier selon la revendication 5, caractérisé en ce que le carter d'amortissement (35) comporte, des deux côtés de la garniture d'amortissement (43), des surfaces de guidage (44) destinées au coulisseau (34).

14. Amortisseur à friction selon l'une des revendications 1 à 9 ou 12 et 13, en particulier selon la revendication 13, caractérisé en ce que le carter d'amortissement (35) est supporté radialement dans le carter tubulaire (30) par l'intermédiaire de nervures d'appui et de centrage (45).

15. Amortisseur à friction selon l'une des revendications 1 à 14, caractérisé en ce que le carter d'amortissement (11, 11', 11'', 11''', 35) est conçu sous la forme d'un carter de guidage.
